# EUROPÄISCHE PATENTSCHRIFT

(11) **EP 1 527 203 B1**
(45) Veröffentlichungstag und Bekanntmachung des Hinweises auf die Patenterteilung: **18.04.2007**
(21) Anmeldenummer: 03790655.9
(22) Anmeldetag: 29.07.2003
(51) Int. Cl.: C12Q 1/68

(54) **Radikalisch vernetzbares Hydrogel mit Linkergruppen**
Radically crosslinkable hydrogel comprising linker groups
Hydrogel réticulable par voie radicalaire comprenant des groupes de liaisons

(30) Priorität: 08.08.2002 DE 10236461
(43) Veröffentlichungstag der Anmeldung: 04.05.2005
(73) Patentinhaber: SIEMENS AKTIENGESELLSCHAFT, 80333 München (DE)
(72) Erfinder: ARQUINT, Philippe, CH-7402 Bonaduz (CH); FEUCHT, Hans-Dieter, 71272 Renningen (DE); GUMBRECHT, Walter, 91074 Herzogenaurach (DE); GÖTZ, Hannelore, 73732 Esslingen a. N. (DE)
(86) Internationale Anmeldenummer: PCT/DE2003/002548
(87) Internationale Veröffentlichungsnummer: WO 2004/020660

(56) Entgegenhaltungen:
- WO-A-00/31148
- WO-A-00/43355
- DE-A- 4 023 578
- US-A- 5 401 508
- US-A- 5 428 076
- US-A- 5 596 038
- VASILISKOV A V ET AL: "FABRICATION OF MICROARRAY OF GEL-IMMOBILIZED COMPOUNDS ON A CHIP BYCOPOLYMERIZATION" BIOTECHNIQUES, EATON PUBLISHING, NATICK, US, Bd. 27, Nr. 3, September 1999 (1999-09), Seiten 592,594,596-598,600,602,604,606, XP000849476 ISSN: 0736-6205
- TIMOFEEV E ET AL: "Binding specificity and stability of duplexes formed by modified oligonucleotides with a 4096-hexanucleotide microarray" NUCLEIC ACIDS RESEARCH, OXFORD UNIVERSITY PRESS, SURREY, GB, Bd. 29, Nr. 12, Juni 2001 (2001-06), Seiten 2626-2634, XP002961131 ISSN: 0305-1048

## Beschreibung

Die vorliegende Erfindung betrifft radikalisch vernetzbare liquide Zusammensetzungen zur Erzeugung von Hydrogelen auf Basis von Polyacrylamid.

In der modernen biologischen Analysentechnik sowie in der medizinischen Diagnostik werden in zunehmenden Maße sogenannte Biochips eingesetzt. Biochips sind meist planare Trägersysteme aus Glas oder Kunststoff, deren Oberfläche mit einer zweidimensionalen Erkennungsschicht, welche biologische Erkennungsmoleküle umfasst, ausgerüstet sind. Ein bekanntes Beispiel für einen derartigen Biochip ist der optisch auslesbare DNA-Chip, welcher von F. Hänel, H.P. Saluz in BIOforum 9/99, Seiten 504-507 beschrieben ist.

Zur Steigerung der Empfindlichkeit derartiger Biochips sowie zur Optimierung der Reproduzierbarkeit der Messergebnisse ist der Einsatz dreidimensionaler Immobilisierungsschichten für die biologischen Erkennungsmoleküle sinnvoll. So verwendet die Firma Schleicher & Schuell GmbH eine dreidimensionale Immobilisierungsschicht für ein Produkt mit dem Namen FAST^{™} Slides DNA-Chips, in denen Fänger-Oligos in einer dreidimensionalen Nitrocellulose-Membran immobilisiert sind (Schleicher & Schuell, BioMolecular Screening, Catalog 2001 (int. Edt.)).

Ein Problem bei der technischen Realisierung entsprechender Immobilisierungsschichten ist zunächst der Wunsch nach einer kostengünstigen Methode zum Aufbringen der Schichten auf die Chips oder auf Transducersysteme. Günstigerweise werden die Immobilisierungssysteme aus flüssigen Vorstufen auf eine geeignete Unterlage aufgetropft, darauf dispensiert, aufgeschleudert oder aufgedruckt. Zum Verfestigen der Schichten werden zum Beispiel thermische Polymerisation bzw. Vernetzung, Trocknungsvorgänge oder fotochemische Polymerisierungs- bzw. Vernetzungsvorgänge gewählt.

Ph. Arquint beschreibt für eine solche Anwendung ein photovernetztes Hydrogel auf Basis eines vernetzten Polyacrylamids ("Integrated Blood Gas Sensor for pO2, pCO2 und pH based on Silicon Technology (Dissertation, Ph. Arquint, Uni Neuchatel, Schweiz, 1994).

Hydrogele spielen eine bedeutende Rolle in der chemischen und/oder biochemischen Analytik sowie insbesondere bei der Realisierung von Chemo- und Biosensoren. Sie dienen dazu, ein wässriges Milieu in mechanisch stabiler Form bei gleichzeitiger Gewährleistung des Stoffaustausches in einer überwiegend wässrigen Umgebung zu realisieren. Durch Wahl der chemischen Zusammensetzung, was die Komponenten und deren Verhältnis untereinander anbetrifft, können die Eigenschaften der Hydrogele, wie Wassergehalt, Quellverhalten, mechanische Stabilität, etc. über weite Bereiche variiert werden.

Ph. Arquint beschreibt in seiner Dissertation eine Methode, bei welcher Poly-Acrylamid-Hydrogele mit Hilfe einer annähernd halbleiterkompatiblen Methode auf Silicium-Wafern aufgebracht und fototechnisch strukturiert werden. Bei der beschriebenen Technologie liegt jedoch ein entscheidendes Problem vor:

Ein Nachteil des von Arquint beschriebenen Systemes, d.h. der Hydrogel-Vorstufe, ist darin zu sehen, dass in der vernetzten Schicht keine reaktiven Linkergruppen zur Verfügung stehen, mit deren Hilfe chemische oder biologische Erkennungsmoleküle für analytische Anwendungen eingekoppelt werden.

Timofeev et al. beschreiben in Nucleic Acids Research, 1966, Band 24, Nr. 16, Seiten 3142-3148 ein chemisch modifiziertes radikalisch vernetztes Polyacrylamid, dass u.a. für die Immobilisierung von Fänger-Oligos eingesetzt werden kann. Als Kopplungsgruppen im Hydrogel werden Amino- oder Aldehyd-Gruppen verwendet. Aldehyd- bzw. Amino- funktionalisierte Fänger-Oligos können an diese Kopplungsgruppen unter reduktiven Reaktionsbedingungen kovalent immobilisiert werden. Das bedeutet, dass neben der eigentlichen Kopplungsreaktion zwischen Amino- und Aldehydgruppe bzw. umgekehrt ein zusätzlicher Reduktionsschritt unter Einsatz von Reduktionsmitteln erforderlich ist. Weitere von Timofeev et al. beschriebene Methoden zur chemischen Aktivierung des vernetzten Polyacrylamids erfordern ebenfalls zusätzliche Reaktionsschritte in der Polymermatrix.

Aufgabe der vorliegenden Erfindung ist daher die Bereitstellung eines radikalisch vernetzbaren Hydrogelsystems auf Acrylamidbasis, das ein Comonomer enthält, das die kovalente Ankopplung entsprechend modifizierter Biomoleküle, d.h. chemischer oder biologischer Erkennungsmoleküle, mit kompatiblen Linkergruppen, über eine reaktive Linkergruppe in einem einfachen, schnellen Reaktionsschritt ohne zusätzlichen Chemikalieneinsatz möglich macht.

Gegenstand der vorliegenden Erfindung ist demzufolge eine radikalisch vernetzbare, liquide Zusammensetzung zur Erzeugung einer Hydrogelschicht auf Basis von Polyacrylamid gemäss Anspruch 1.

Nach Schichtherstellung und thermischer bzw. Fotovernetzung wird ein mit Wasser quellbares Hydrogel erhalten, das reaktive Linkergruppen zur Immobilisierung chemischer oder biologischer Erkennnungsmoleküle für analytische oder diagnostische Anwendungen enthält.

Die Monomervorstufe des Polyacrylamids basiert auf Methylenbisacrylamid, wodurch wie bei Arquint zwei Monomerketten miteinander verbunden sind. Durch Variation der Konzentration des Vernetzungsmittels Methylenbisacrylamid, Dimethylacrylsäureester, wie zum Beispiel Tetraethylenglycoldimethacrylat, lässt sich die Maschenweite des Hydrogeles leicht einstellen.

Das Comonomer mit reaktiven Linkergruppen ist aus der Gruppe ausgewählt, die aus Maleinsäureanhydrid und/oder Glycidyl(meth)acrylat besteht. Der Weichmacher ist Mono-, Di- und/oder Triethylenglykol. Durch Optimierung des Weichmacheranteiles in der Zusammensetzung kann die getrocknete Vorstufenschicht in ihrem Polymerisierungsverhalten optimiert werden.

Die Zusammensetzung liegt vorzugsweise in einem polaren, mit Wasser mischbaren Lösungsmittel, vorzugsweise Dimethylformamid vor. Durch Variation des Lösungsmittelanteils kann die Verarbeitungsviskosität leicht eingestellt werden.

Die erfindungsgemäße Zusammensetzung bietet für die Erzeugung von Hydrogelen, insbesondere solcher, welche zur Herstellung von Immobilisierungsschichten Verwendung finden sollen, viele Vorteile. Die Vorstufenkomponenten sind in einem breit variierbaren Mischungsverhältnis mischbar. Die Viskosität der Zusammensetzung ist leicht einstellbar. Eine gute Schichtbildung ist gewährleistet, während welcher keine Phasentrennung auftritt. Die Schicht ist für Licht zur Fotoinitiierung ausreichend transparent. Vernetzungsdichte und Wasserquellbarkeit lassen sich beliebig einstellen. Die Hilfskomponenten, wie Weichmacher etc., können nach der Vernetzung leicht ausgewaschen werden. Die Haftung an der Substratoberfläche kann mittels üblicher Haftvermittlersysteme auf beispielsweise Silanbasis verstärkt werden.

## Patentansprüche

1. Radikalisch vernetzbare liquide Zusammensetzung zur Erzeugung einer Hydrogelschicht auf Basis von Polyacrylamid, wobei die Zusammensetzung neben der Monomer-Vorstufe des Polyacrylamids, dem Vernetzungsmittel und den/dem Radikalinitiator(en), wenigstens ein Comonomer mit reaktiven Linkergruppen und wenigstens einen Weichmacher umfasst, **dadurch gekennzeichnet, dass** die Monomer-Vorstufe des Polyacrylamids Methylenbis(meth)acrylamid und/oder Dimeth-acryl-säureester ist, das Comonomer mit reaktiven Linkergruppen aus der Gruppe ausgewählt ist, die aus Maleinsäureanhydrid und/oder Glycidyl(meth)acrylat besteht und der Weichmacher aus der Gruppe ausgewählt ist, die aus Mono-, Di- und/oder Triethylenglycol besteht.

2. Zusammensetzung nach Anspruch 1, **dadurch gekennzeichnet, dass** sie in einem polaren, mit Wasser mischbaren Lösungsmittel vorliegt.

3. Zusammensetzung nach Anspruch 2, **dadurch gekennzeichnet, dass** das Lösungsmittel Dimethylformamid ist.

4. Verwendung einer Zusammensetzung nach einem der Ansprüche 1 bis 3 zur Erzeugung einer Immobilisierungsschicht für Biomoleküle auf einer Transduceroberfläche.

## Claims

1. Radically crosslinkable liquid composition for producing a polyacrylamide-based hydrogel layer, with the composition comprising at least one comonomer with reactive linker groups and at least one softener in addition to the monomer precursor of the polyacrylamide, the crosslinking agent and the radical initiatior,
**characterised in that**
the monomer precursor of the polyacrylamide is based on acrylamide methylenbis(meth)acrylamide and/or dimethacrylic acid ester, the comonomer with reactive linker groups is selected from the group comprising maleic acid anhydride and/or glycidyl (meth)acrylate and the softener is selected from the group comprising monoethylene glycol, diethylene glycol and/or triethylene glycol.

2. Composition according to claim 1,
**characterised in that**
it is available in a polar solvent which can be mixed with water.

3. Composition according to claim 2,
**characterised in that**
the solvent is dimethyl formamide.

4. Use of a composition according to one of the claims 1 to 3 to produce an immobilization layer for biomolecules on a transducer surface.

## Revendications

1. Composition liquide réticulable par voie radicalaire pour générer une couche d'hydrogel à base de polyacrylamide, la composition comprenant outre le précurseur monomère, du polyacrylamide, l'agent de réticulation et l'initiateur/les initiateurs radicalaire(s), au moins un comonomère avec des groupes de lieurs réactifs et au moins un plastifiant, **caractérisée en ce que** le précurseur monomère du polyacrylamide est du méthylènebis(meth)acrylamide et/ou de l'ester diméthylacrylique, le comonomère est choisi avec des groupes de lieurs réactifs dans le groupe qui se compose d'anhydride d'acide maléique et/ou de glycidyl(méth)acrylate et le plastifiant est choisi dans le groupe qui se compose de mono-, di-, et/ou triéthylèneglycol.

2. Composition selon la revendication 1, **caractérisée en ce qu'**elle est présente dans un solvant polaire et miscible avec de l'eau.

3. Composition selon la revendication 2, **caractérisée en ce que** le solvant est du formamide de diméthyle.

4. Utilisation d'une composition selon l'une quelconque des revendications 1 à 3 pour générer une couche d'immobilisation pour des biomolécules sur une surface de transducteur.
